# EUROPÄISCHE PATENTSCHRIFT

(11) **EP 1 815 259 B1**
(45) Veröffentlichungstag und Bekanntmachung des Hinweises auf die Patenterteilung: **09.04.2008**
(21) Anmeldenummer: 05810182.5
(22) Anmeldetag: 03.11.2005
(51) Int. Cl.: G01R 31/00, B60R 21/01

(54) **VERFAHREN ZUM BETRIEB EINES STEUERGER[TS F]R EIN FAHRZEUG, INSBESONDERE FÜR EINE SICHERHEITSEINRICHTUNG EINES FAHRZEUGS**
METHOD FOR OPERATING A CONTROL DEVICE FOR A MOTOR VEHICLE, PARTICULARLY FOR A SAFETY DEVICE OF A MOTOR VEHICLE
PROCEDE POUR FAIRE FONCTIONNER UN APPAREIL DE COMMANDE POUR UN VEHICULE, EN PARTICULIER POUR UN DISPOSITIF DE SECURITE D'UN VEHICULE

(30) Priorität: 23.11.2004 DE 102004056475
(43) Veröffentlichungstag der Anmeldung: 08.08.2007
(73) Patentinhaber: Conti Temic microelectronic GmbH, 90411 Nürnberg (DE)
(72) Erfinder: KULESCH, Manfred, 85049 Ingolstadt (DE); HECKEL, Markus, 91616 Neusitz (DE)
(86) Internationale Anmeldenummer: PCT/DE2005/001966
(87) Internationale Veröffentlichungsnummer: WO 2006/056155

(56) Entgegenhaltungen:
- US-A- 5 107 428
- US-A- 5 712 784
- US-A- 5 726 887
- US-A1- 2003 225 461
- US-B1- 6 275 756

## Beschreibung

Die Erfindung betrifft ein Verfahren zum Betrieb eines Steuergeräts für ein Fahrzeug, insbesondere für eine Sicherheitseinrichtung eines Fahrzeugs, gemäß Anspruch 1 und ein Steuergerät für ein Fahrzeug, insbesondere für eine Sicherheitseinrichtung eines Fahrzeugs gemäß Anspruch 14.

In modernen Fahrzeugen wie Personenkraftwagen werden eine Vielzahl von Steuergeräten für die unterschiedlichsten Zwecke eingesetzt, z.B. für Motor- oder Getriebesteuerungen oder für Sicherheitseinrichtungen. Die Steuergeräte dienen zum Ansteuern von Aktuatoren im Fahrzeug, wie beispielsweise von Regelventilen bei einer Getriebesteuerung oder von Zündpillen bei einer Airbagsteuerung. Derartige Steuergeräte, insbesondere solche für Sicherheitseinrichtung von Fahrzeugen wie beispielsweise Airbag-Steuergeräte umfassen in der Regel mehrere Bauelemente in Form von ASICs (Application Specific Integrated Circuits). Ein typisches Airbag-Steuergerät bzw. eine Airbag-Baugruppe umfasst ein ASIC-Netzteil als Versorgungseinheit für die weiteren Bauelemente der Baugruppe und eine Steuereinheit, die in der Regel durch einen Mikroprozessor oder -controller implementiert und zur Steuerung eines Zündstufen-ASICs der Baugruppe vorgesehen ist. Das Zündstufen-ASIC bildet eine Zündstufeneinheit und umfasst Zündendstufen zum Erzeugen von hohen Stromimpulsen, die im Falle einer Auslösung von Schutzmitteln den Zündpillen von Airbags zugeführt werden. Ähnlich ist beispielsweise ein Steuergerät für die Getriebesteuerung aufgebaut, mit dem Unterschied, dass anstelle der Zündstufeneinheit eine Endstufeneinheit zur Ansteuerung von Regelventilen vorgesehen ist.

US 6 275 756 B1 beschreibt ein Verfahren zum Betrieb eines solches steuergeräts gemäß dem Oberbegriff des Anspruchs 1.

Zunehmend wird in diesen Steuergeräten noch eine zweite Steuereinheit in Form eines "kleineren", d.h. technisch weniger aufwendigen Prozessors eingesetzt, der die Aufgabe hat, die "Haupt-"Steuereinheit bzw. den Hauptcontroller und andere Systeme der Baugruppe in ihrer Funktion zu überwachen. Die Überwachung erfolgt jedoch erst bei betriebsbereiten Bauelementen.

Bei Inbetriebnahme eines Steuergeräts bzw. einer entsprechenden Baugruppe werden üblicherweise zunächst alle Baueinheiten und -elemente im Resetzustand gehalten, um anschließend nach Zurücknahme des Resets hochzufahren bzw. in Betriebsbereitschaft überzugehen. Hierbei muss darauf geachtet werden, dass keine unerwünschten Steuersignale intern in dem Steuergerät erzeugt werden, die möglicherweise zu einer unerwünschten Ansteuerung eines Aktuators führen. Beispielsweise kann es im schlimmsten Fall vorkommen, dass eine Zündstufeneinheit eines Airbagsteuergerätes unerwünschterweise einen Stromimpuls zum Zünden einer Zündpille erzeugt.

Aufgabe der vorliegenden Erfindung ist es nun, ein Steuergerät für ein Fahrzeug, insbesondere für eine Sicherheitseinrichtung eines Fahrzeugs, und ein Verfahren zur Herstellung der Betriebsbereitschaft eines Steuergerätes für ein Fahrzeug, insbesondere für eine Sicherheitseinrichtung eines Fahrzeugs, vorzuschlagen, wobei ein definierter und sicherer Übergang des Steuergeräts von einem Resetzustand in die Betriebsbereitschaft ermöglicht und insbesondere die Gefahr einer unerwünschten Aktivierung eines Aktuators im Fahrzeug, insbesondere die Auslösung eines Schutzmittels gering ist.

Diese Aufgabe wird durch ein Verfahren sowie ein Steuergerät mit den Merkmalen der unabhängigen Ansprüche gelöst. Bevorzugte Ausgestaltungen der Erfindung ergeben sich aus den abhängigen Ansprüchen.

Ein wesentlicher Gedanke der Erfindung besteht darin, dass einzelnen Einheiten eines Steuergerätes für ein Fahrzeug, insbesondere für eine Sicherheitseinrichtung eines Fahrzeugs, während der Inbetriebnahme des Steuergerätes derart überwacht und freigegeben werden, dass Enstufeneinheiten wie beispielsweise Zündstufeneinheiten zur Steuerung der Endstufen pyrotechnischer Zünder nur dann aktiviert werden, wenn sich alle Steuereinheiten des Steuergerätes in einem definierten Betriebszustand befinden. Somit wird die Gefahr einer unerwünschten Aktivierung eines Aktuators, wie beispielsweise die Auslösung eines Airbags während der kritischen Inbetriebnahmephase des Steuergerätes wesentlich verringert, wenn nicht sogar ganz beseitigt.

Die Erfindung betrifft nun ein Steuergerät für ein Fahrzeug, insbesondere für eine Sicherheitseinrichtung eines Fahrzeugs, umfassend mindestens eine Steuereinheit und mindestens eine Endstufeneinheit zur Ansteuerung von Aktuatoren im Fahrzeug. Vorzugsweise ist eine Versorgungseinheit vorgesehen und ist diese ausgebildet, die mindestens eine Endstufeneinheit erst zu aktivieren, wenn die mindestens eine Steuereinheit eine Meldung über eine ordnungsgemäße Betriebsbereitschaft an die Versorgungseinheit gesendet hat. Damit können die einzelnen Einheiten des Steuergerätes nacheinander freigegeben werden. Die mindestens eine Endstufeneinheit kann erst aktiviert werden, wenn die mindestens eine Steuereinheit des Steuergerätes betriebsbereit ist. Damit wird ein definierter und sicherer Übergang des Steuergerätes von einem Resetzustand in die Betriebsbereitschaft ermöglicht.

Insbesondere ist die Versorgungseinheit ausgebildet, die mindestens eine Endstufeneinheit in einen Resetzustand zu versetzen, wenn die mindestens eine Steuereinheit eine Meldung über eine Störung der Betriebsbereitschaft an die Versorgungseinheit sendet. Wenn beispielsweise die mindestens eine Steuereinheit während des Betriebes des Steuergerätes regelmäßig ihre internen Systeme überprüft, kann im Fall einer auftretenden Störung sofort ein Reset der mindestens einen Endstufeneinheit vorgenommen werden. Sobald eine Fehlermeldung der mindestens einen Steuereinheit an die Versorgungseinheit gesendet wird, kann diese die mindestens eine Endstufeneinheit über ein Resetsignal in den Resetzustand versetzen und damit eine Fehlaktivierung eines Aktuators wie beispielsweise im Falle eines Steuergeräts für eine Sicherheitseinrichtung des Fahrzeugs eine Fehlauslösung beispielweise eines Airbags verhindern.

Vorzugsweise ist die Endstufeneinheit eine Zündstufeneinheit zur Ansteuerung pyrotechnischer Zünder von Schutzmitteln der Sicherheitseinrichtung. In diesem Fall ist also das Steuergerät für die Sicherheiteinrichtung des Fahrzeugs ausgebildet. Im Bereich der Sicherheit ist die durch die Erfindung erzielte geringe Wahrscheinlichkeit der Erzeugung unerwünschter Ansteuersignale für die Zündstufeneinheit von besonderer Bedeutung. Daher eignet sich die Erfindung optimal für diesen Einsatzzweck.

Ferner kann das Steuergerät ausgebildet sein, eine von der mindestens einen Steuereinheit erzeugte Kommunikationsfrequenz von Schnittstellen des Steuergerätes mit externen Sensoren zu überwachen, wenn die mindestens eine Steuereinheit eine Meldung über eine ordnungsgemäße Betriebsbereitschaft an die Versorgungseinheit gesendet hat, und bei einer erfassten Frequenzstörung einen Reset der mindestens einen Steuereinheit und der mindestens einen Endstufeneinheit vorzunehmen. Beispielsweise kann durch die Überwachung der Kommunikationsfrequenz ein Pinabriss oder ein Kurzschluss diagnostiziert werden. Die mindestens eine Endstufeneinheit und die mindestens eine Steuereinheit können in einem derartigen Fall unverzüglich in den Resetzustand versetzt werden, da ein sicheres Auslösen der Endstufeneinheit gefährdet ist.
Insbesondere kann das Steuergerät ausgebildet sein, eine Frequenzstörung der Kommunikationsfrequenz zu erkennen, wenn gemessene Frequenzwerte der Kommunikationsfrequenz außerhalb eines vorgegebenen Toleranzbereichs liegen. Hierbei kann die von der mindestens einen Steuereinheit erzeugte Kommunikationsfrequenz bspw. von der Versorgungseinheit überwacht werden, sobald die mindestens eine Steuereinheit ihre Meldung über eine ordnungsgemäße Betriebsbereitschaft an die Versorgungseinheit gesendet hat. Durch die Überwachung der Kommunikationsfrequenz kann eine Implementierung einer zusätzlichen Einschaltautomatik vermieden werden.

Typischerweise beträgt die Kommunikationsfrequenz der Schnittstellen des Steuergerätes im Falle eines Steuergerätes für einen Airbag etwa 4 MHz.

Das Steuergerät kann neben einer ersten Steuereinheit, der sogenannten Master-Steuereinheit, auch mindestens eine zweite Steuereinheit, die sogenannten Slave-Steuereinheit, aufweisen. Die zweite Steuereinheit ist zur Überwachung der Funktion der ersten Steuereinheit vorgesehen. In der Regel ist sie durch einen leistungsschwächeren Prozessor als die erste Steuereinheit implementiert. Insbesondere implementiert sie weit weniger Funktionen als die erste Steuereinheit, nämlich üblicherweise nur Überwachungs- und Alarmfunktionen. Die zweite Steuereinheit kann zudem zur Überwachung anderer Einheiten des Steuergerätes eingesetzt werden. Die Reihenfolge der Aktivierung kann dabei anwendungsspezifisch variieren, insbesondere auch zuerst der Slave aktiviert werden und nachfolgend der Master bzw. umgekehrt. Eine Aktivierung des Slaves vor dem Master ist dann bevorzugt, wenn dieser als Funktionsüberwachungseinheit für den Master fungiert.

Das Steuergerät, insbesondere die Versorgungseinheit kann weiterhin ausgebildet sein, die mindestens eine zweite Steuereinheit erst zu aktivieren, wenn die erste Steuereinheit eine Meldung über eine ordnungsgemäße Betriebsbereitschaft bspw. an die Versorgungseinheit gesendet hat, und die mindestens eine Endstufeneinheit erst dann zu aktivieren, wenn die mindestens eine zweite Steuereinheit eine Meldung über eine ordnungsgemäße Betriebsbereitschaft gesendet hat. So kann beispielsweise zuerst die erste Steuereinheit aktiviert werden, die daraufhin einen internen Systemtest ausführt. Nach Ablauf des Systemtests sendet sie im Falle eines fehlerfreien Betriebs eine Meldung über eine ordnungsgemäße Betriebsbereitschaft bspw. an die Versorgungseinheit. Daraufhin wird die mindestens eine zweite Steuereinheit aktiviert, bspw. durch die Versorgungseinheit, die wie die erste Steuereinheit einen internen Systemtest ausführt und nach Abschluss des Systemtests im Falle eines fehlerfreien Betriebs eine Meldung über eine ordnungsgemäße Betriebsbereitschaft bspw. an die Versorgungseinheit sendet. Anschließend kann die mindestens eine Endstufeneinheit aktiviert werden. Durch diese mehrstufige, "serielle" Freigabe von Bauelementen des Steuergeräts wird ein sehr sicherer und definierter Übergang von einer Initialisierungs- in eine Betriebsphase erzielt.

Die mindestens eine zweite Steuereinheit kann vor allem ausgebildet sein, während des Betriebes des Steuergerätes regelmäßig ihre internen Systeme zu überprüfen, d.h. sogenannte Selbsttests durchzuführen. In diesem Fall kann die Versorgungseinheit ausgebildet sein, die mindestens eine Endstufeneinheit in einen Resetzustand zu versetzen, wenn die mindestens eine zweite Steuereinheit eine Meldung über eine Störung der Betriebsbereitschaft bspw. an die Versorgungseinheit sendet. Dadurch wird der laufende Betrieb des Steuergeräts abgesichert. Detektiert die mindestens zweite Steuereinheit einen Fehler und meldet ihn bspw. der Versorgungseinheit, kann durch das Deaktivieren der mindestens einen Endstufeneinheit die Gefahr eines unerwünschten Aktivierens eines Aktuators wie beispielsweise das Auslösens eines Airbags oder das Ansteuern eines Regelventils einer Getriebesteuerung stark reduziert werden. Wenn die mindestens eine zweite Steuereinheit erneut ihre Betriebsbereitschaft meldet, bspw. an die Versorgungseinheit, wird die mindestens eine deaktivierte Endstufeneinheit erneut aktiviert. Insgesamt wird dadurch gewährleistet, dass die mindestens eine Endstufeneinheit nur in Fällen aktiviert ist, in denen alle Bauelemente des Steuergeräts und vor allem die mindestens zweite Steuereinheit fehlerfrei arbeitet.

Schließlich kann auch die erste Steuereinheit ausgebildet sein, während des Betriebes des Steuergerätes regelmäßig ihre internen Systeme zu überprüfen. In diesem Fall kann die mindestens eine zweite Steuereinheit und die mindestens eine Endstufeneinheit in einen Resetzustand versetzen, wenn die erste Steuereinheit eine Meldung über eine Störung der Betriebsbereitschaft sendet. Nach Detektion eines Fehlers in der ersten Steuereinheit kann durch Deaktivierung der mindestens einen Endstufeneinheit eine unerwünschte Aktivierung eines Aktuators, im Falle einer Sicherheitseinrichtung ein unerwünschtes Zünden beispielsweise eines Airbags verhindert werden. Wenn die erste Steuereinheit ihre Betriebsbereitschaft wiederhergestellt hat und dies bspw. der Versorgungseinheit meldet, kann erneut die mindestens eine zweite Steuereinheit und die mindestens eine Endstufeneinheit aktiviert werden. Damit kann sichergestellt werden, dass die mindestens eine Endstufeneinheit nur dann aktiviert ist, wenn die erste Steuereinheit fehlerfrei arbeitet.

Die Erfindung betrifft ferner ein Verfahren zum Betriebeines Steuergerätes für ein Fahrzeug, insbesondere für eine Sicherheitseinrichtung eines Fahrzeugs, umfassend mindestens eine Steuereinheit und mindestens eine Endstufeneinheit zur Ansteuerung von Aktuatoren im Fahrzeug. Das Steuergerät, bspw. die Versorgungseinheit, aktiviert die mindestens eine Endstufeneinheit erst, wenn die mindestens eine Steuereinheit eine Meldung über eine ordnungsgemäße Betriebsbereitschaft gesendet hat. Mit diesem Verfahren können die Einheiten des Steuergerätes, insbesondere die mindestens eine Endstufeneinheit, einzeln aktiviert oder in einen Resetzustand versetzt und Fehlauslösungen beispielsweise eines Airbags verhindert werden, falls das Steuergerät für eine Sicherheitseinrichtung vorgesehen ist.

Insbesondere wird die mindestens eine Endstufeneinheit in einen Resetzustand versetzt, bspw. durch die Versorgungseinheit, wenn die mindestens eine Steuereinheit eine Meldung über eine Störung der Betriebsbereitschaft bspw. an die Versorgungseinheit sendet. Damit kann sofort bei Auftreten einer Störung in der mindestens einen Steuereinheit die mindestens eine Endstufeneinheit in den Resetzustand versetzt werden und eine unerwünschte Aktivierung eines Aktuators, beispielsweise ein unerwünschtes Auslösen eines Schutzmittels verhindert werden.

Um beispielsweise Fehler wie einen Pinabriss oder einen Kurzschluss erkennen zu können, kann die Versorgungseinheit die von der mindestens einen Steuereinheit erzeugte Kommunikationsfrequenz überwachen. Die Versorgungseinheit kann beispielsweise eine Frequenzstörung der Kommunikationsfrequenz erkennen, wenn gemessene Frequenzwerte der Kommunikationsfrequenz außerhalb eines vorgegebenen Toleranzbereichs liegen.

Vorzugsweise umfasst das Steuergerät eine erste Steuereinheit und mindestens eine zweite Steuereinheit zur Überwachung der Funktion der ersten Steuereinheit. Die mindestens eine zweite Steuereinheit kann außerdem zur Überwachung anderer Einheiten des Steuergerätes eingesetzt werden.

Das Steuergerät, bspw. die Versorgungseinheit, kann die mindestens eine zweite Steuereinheit erst aktivieren, wenn die erste Steuereinheit eine Meldung über eine ordnungsgemäße Betriebsbereitschaft an die Versorgungseinheit gesendet hat, und die mindestens eine Endstufeneinheit erst dann aktivieren, wenn die mindestens eine zweite Steuereinheit eine Meldung über eine ordnungsgemäße Betriebsbereitschaft gesendet hat. Erst nach Aktivierung und Feststellung der ordnungsgemäßen Betriebsbereitschaft der ersten Steuereinheit kann die mindestens eine zweite Steuereinheit aktiviert werden. Ist die mindestens zweite Steuereinheit ebenfalls betriebsbereit, kann die mindestens eine Endstufeneinheit aktiviert werden. Damit wird sichergestellt, dass die mindestens eine Zündstufeneinheit erst aktiviert wird, wenn die mindestens zwei Steuereinheiten Betriebsbereitschaft signalisieren. Eine unerwünschte Auslösung eines Aktuators, insbesondere eines Schutzmittels wie beispielsweise eines Airbags durch das eventuelle Auftreten unerwünschter Steuersignale oder das Auftreten von Fehler- oder Blockadezuständen während des Übergangs der mindestens zwei Steuereinheiten vom Resetzustand zur Betriebsbereitschaft kann damit verhindert werden.

Weiterhin kann die Versorgungseinheit die mindestens eine Endstufeneinheit in einen Resetzustand versetzen, wenn die mindestens eine zweite Steuereinheit eine Meldung über eine Störung der Betriebsbereitschaft sendet. Außerdem kann die mindestens einen Endstufeneinheit erneut aktiviert werden, wenn die mindestens eine zweite Steuereinheit eine wiederhergestellte Betriebsbereitschaft meldet. Damit ist gewährleistet, dass die Endstufeneinheit bei fehlerhafter Funktion der mindestens einen zweiten Steuereinheit deaktiviert ist.

Insbesondere kann die mindestens eine zweite Steuereinheit und die mindestens eine Endstufeneinheit in einen Resetzustand versetzt werden, wenn die erste Steuereinheit eine Meldung über eine Störung der Betriebsbereitschaft sendet. Ferner können die mindestens einen zweiten Steuereinheit und die mindestens einen Endstufeneinheit erneut aktiviert werden, wenn die erste Steuereinheit eine wiederhergestellte Betriebsbereitschaft meldet. Damit ist gewährleistet, dass die Endstufeneinheit bei fehlerhafter Funktion der ersten Steuereinheit deaktiviert ist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.
In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Blockschaltbild eines Steuergerätes für Airbags gemäß der Erfindung mit einem ASIC-Netzteil , einem Master-Mikrocontroller, einem Slave-Mikrocontroller und einer Zündstufeneinheit; und
- Fig. 2: ein Ablaufdiagramm des Verfahrens zum Betriebeines Steuergerätes für eine Sicherheitseinrichtung eines Fahrzeugs gemäß der Erfindung.
- Fig. 3: Ablaufdiagramm mit einer alternativen Resetfolge bei Wegfall der Betriebsbereitschaft einer Einheit

Im folgenden wird die Erfindung anhand eines Ausführungsbeispiels eines Airbag-Steuergerätes erläutert. An dieser Stelle sei angemerkt, dass die Erfindung in jedem anderen Steuergerät eines Fahrzeugs vorteilhaft eingesetzt werden kann, wie beispielsweise Steuergeräte für den Antrieb und das Fahrwerk eines Fahrzeugs, insbesondere für eine Getriebesteuerung, bei der als Aktuatoren Regelventile angesteuert werden.

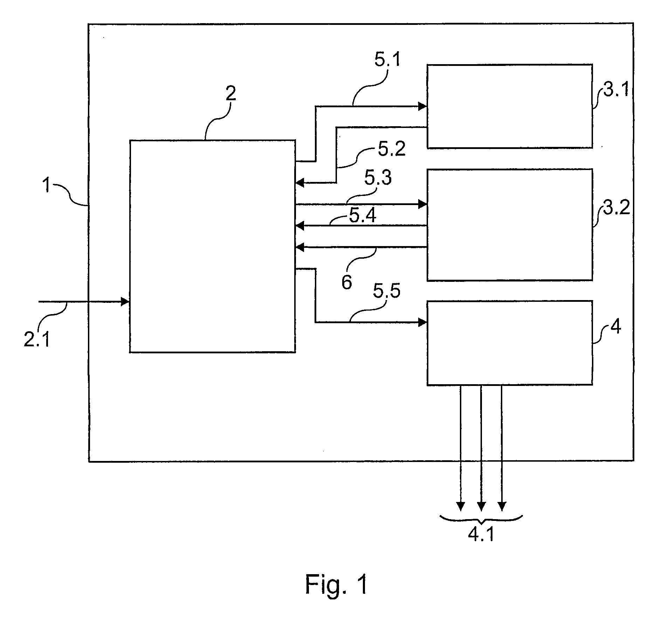

Fig. 1 zeigt ein Blockschaltbild eines Steuergerätes 1 für Airbags mit einem ASIC-Netzteil 2 als Versorgungseinheit, einem Master-Mikrocontroller 3.2 und einem Slave-Mikrocontroller 3.1 als erste bzw. zweite Steuereinheit und einer Zündstufeneinheit 4 zur Auslösung von Airbags über Auslöseleitungen 4.1. Ferner sind in Fig. 1 die zur Herstellung der Betriebsbereitschaft des Steuergerätes wesentlichen Kommunikationsverbindungen 5.1, 5.2, 5.3, 5.4, 6 und 5.5 dargestellt. Diese Verbindungen werden später noch genauer erläutert.

Das ASIC-Netzteil 2 versorgt die Einheiten 3.1, 3.2 und 4 des Steuergerätes 1 mit Strom und Spannung. Hierzu erzeugt es aus einer KFZ (Kraftfahrzeug)-Bordnetzspannung von beispielsweise 12 V, die sie über eine KFZ-Versorgungsleitung 2.1 erhält, entsprechende Versorgungsspannungen von beispielsweise 5 V für die Bauelemente wie ASICs des Steuergeräts 1. Die internen Versorgungsleitungen des Steuergeräts 1 sind in Fig. 1 nicht dargestellt. Das ASIC-Netzteil stellt ferner die für eine Auslösung der Airbags erforderlichen Stromimpulse bereit. Hierzu sind im Steuergerät 1 (nicht dargestellte) Energiespeicher wie Kondensatoren vorgesehen, die kurzzeitig hohe Ströme zum Zünden von Airbag-Zündpillen bereitstellen können.

Das ASIC-Netzteil 2 ist weiterhin vorzugsweise für die Herstellung der Betriebsbereitschaft aller anderen Einheiten des Steuergerätes 1 und zur Steuerung des Betriebs ausgebildet. Hierzu weist es vorzugsweise eine Logik zur Resetsteuerung für die Einheiten 3.1, 3.2 und 4 auf. Die Resetsteuerung erfolgt durch Erzeugung entsprechender Resetsignale, die an die Einheiten 3.1, 3.2 und 4 über entsprechende Resetleitungen 5.1, 5.3 bzw. 5.5 übermittelt werden. Vom Master- und Slave-Mikrocontroller 3.2 bzw. 3.1 führen ferner Betriebsbereitschaftsleitungen 5.4 bzw. 5.2 bspw. zum ASIC-Netzteil 2 zurück, über die eine Betriebsbereitschaft des entsprechenden Mikrocontrollers 3.2 bzw. 3.1 signalisiert wird. Alternativ können diese Funktionen des Empfangs der Betriebszustandsinformationen und Resetsteuerung auch von einer anderen Einheit des Steuergeräts übernommen werden.

Die Inbetriebnahme des Steuergeräts 1 erfolgt nun gesteuert bspw. durch das ASIC-Netzteil 2 wie folgt: zuerst versetzt das ASIC-Netzteil 2 als Einheiten 3.1, 3.2 und 4 in den Resetzustand, indem es entsprechende Signale über die Resetleitungen 5.1, 5.3 und 5.5 an die Einheiten überträgt. Dann wartet es solange, bis alle Versorgungsspannungen ihren Sollwert erreicht haben und eine Power-On-Verzögerung ausgeführt wurde. Anschließend aktiviert das ASIC-Netzteil 2 den Slave-Mikrocontroller 3.1, der den Master-Mikrocontroller 3.2 und andere Einheiten des Steuergerätes 1 überwacht, indem es den Reset wegnimmt, d.h. ein entsprechendes Not-Resetsignal über die Resetleitung 5.1 an den Slave-Mikrocontroller 3.1 überträgt. Der Slave-Mikrocontroller 3.1 führt daraufhin einen internen Systemtest durch und sendet ein Betriebsbereitschaftssignal über die Betriebsbereitschaftsleitung 5.2 bspw. an das ASIC-Netzteil 2 zurück, falls beim internen Systemtest keine Fehler aufgetreten sind. Daraufhin aktiviert bspw. das ASIC-Netzteil 2 den Mikrocontroller 3.2, indem es den Reset wegnimmt, d.h. ein entsprechendes Not-Resetsignal über die Resetleitung 5.3 an den Master-Mikrocontroller 3.2 überträgt. Der Master-Mikrocontroller 3.2 führt daraufhin ebenfalls einen internen Systemtest durch und startet anschließend die Algorithmen zum Verarbeiten von Beschleunigungssignalen und Feststellen eines Unfalls, falls keine Fehler beim internen Systemtest detektiert wurden. Ferner sendet er ebenfalls ein Betriebsbereitschaftssignal 5.4 über die Betriebsbereitschaftsleitung bspw. an das ASIC-Netzteil 2 zurück. Sind beide Mikrocontroller betriebsbereit, aktiviert bspw. das ASIC-Netzteil 2 schließlich die Zündstufeneinheit 4, indem es den Reset wegnimmt, d.h. ein entsprechendes Not-Resetsignal über die Resetleitung 5.5 an die Zündstufeneinheit 4 überträgt. Der besondere Vorteil einer solchen Hintereinanderabfolge, quasi einer Kaskadierung der Betriebsbereitschaft der einzelnen Einheiten ist, dass unerwartete Zustände und dadurch ausgelöste Fehleinschätzungen weitestgehend vermieden werden können.

Die beiden Mikrocontroller 3.1, 3.2 führen anschließend während des Betriebes des Steuergerätes 1 fortwährend eine Überwachung ihrer eigenen Systeme beziehungsweise der Systeme anderer Einheiten durch, wie durch die Rückführungsschritte s13 und s14 angedeutet ist. Diagnostiziert der Slave-Mikrocontroller 3.1 einen Fehler, meldet er diesen Fehler über die Betriebsbereitschaftsleitung 5.2 durch ein entsprechendes Signal (S04: SOK=0) bspw. dem ASIC-Netzteil 2. Das ASIC-Netzteil 2 versetzt daraufhin den Master-Mikrocontroller 3.2 (S04:NMRES=0) und die Zündstufeneinheit 4 (S04: NTRES=0) über ihre Resetleitungen 5.3, 5.5 durch entsprechende Resetsignale in den Resetzustand. Diagnostiziert weiterhin der Master-Mikrocontroller 3.2 einen Fehler und meldet diesen Fehler über seine Betriebsbereitschaftsleitung 5.4 durch ein entsprechendes Signal dem ASIC-Netzteil 2, versetzt das ASIC-Netzteil 2 die Zündstufeneinheit 4 über die Resetleitung 5.5 in den Resetzustand.

Beispielsweise in dem ASIC-Netzteil 2 ist außerdem eine Frequenzüberwachung für eine Kommunikationsfrequenz der Schnittstellen des Steuergerätes 1 mit externen Sensoren vorgesehen. Alternativ könnte die Frequenzüberwachung aber auch in einer anderen Einheit, bspw. einem der Steuereinheiten 3.1 oder 3.2 oder einer separaten Einheit untergebracht sein. Die Kommunikationsfrequenz wird im Master-Mikrocontroller 3.2 erzeugt und über die Taktleitung 6 an das ASIC-Netzteil 2 übertragen. Sobald der Master-Mikrocontroller 3.2 sein Betriebsbereitschaftssignal über die Leitung 5.4 bspw. an das ASIC-Netzteil 2 gesendet hat, beginnt dieses mit der Überwachung der Kommunikationsfrequenz auf der Leitung 6. Überschreitet die Kommunikationsfrequenz einen vorgegebenen Toleranzbereich, nimmt bspw. das ASIC-Netzteil 2 einen Reset aller Einheiten des Steuergerätes 1 über ihre Resetleitungen 5.1, 5.3, 5.5 vor. Alternativ kann vorzugsweise auch nur ein begrenzter Reset erfolgen. Zumindest sollte aber ein Reset der mindestens einen Endstufeneinheit (4) vorgenommen werden. abhängig von Aufbau und Wirkungsweise des Steuergeräts ist aber auch denkbar, bei einer erfassten Frequenzstörung (S11) neben den Endstufeneinheiten (4) nur noch einen Reset mindestens einen Steuereinheit (3.1,3.2) vorgenommen wird (S01).

In einem Steuergerät 1 können neben einer Zündstufeneinheit 4 zur Zündung eines Airbags zusätzliche Zündstufeneinheiten zur Ansteuerung weiterer pyrotechnischer Zünder vorgesehen sein, beispielsweise für Seitenairbags, Gurtstraffer oder Gurtkraftbegrenzer. Jede dieser Zündstufeneinheiten wird wie die Einheit 4 vom ASIC-Netzteil 2 nur bei ordnungsgemäßer Betriebsbereitschaft der Mikrocontroller 3.1, 3.2 aktiviert.

Solange die beiden Mikrocontroller 3.1 und 3.2 nicht betriebsbereit sind und damit die Zündstufeneinheit 4 nicht aktiviert ist, kann das Steuergerät 1 beispielsweise eine optische Anzeige ansteuern, die Fahrzeuginsassen anzeigt, dass eine Sicherheitseinrichtung des Fahrzeugs wie beispielsweise ein Airbag nicht funktionsbereit ist.

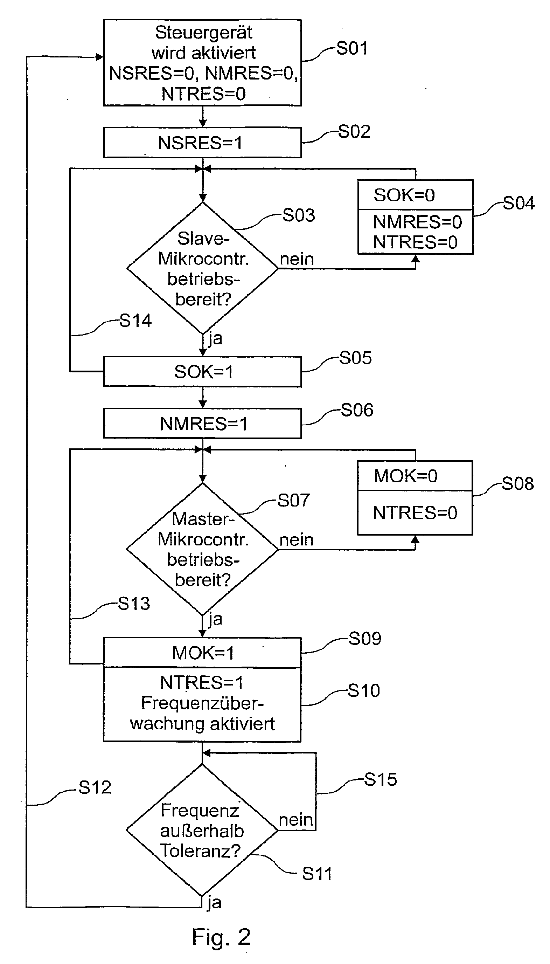

Fig. 2 zeigt ein Ablaufdiagramm des Verfahrens zur Herstellung der Betriebsbereitschaft des in Fig. 1 dargestellten Steuergerätes 1 für eine Sicherheitseinrichtung eines Fahrzeugs.

Während der Aktivierung S01 des Steuergerätes 1 sind das Resetsignal 5.1 des Slave-Mikrocontrollers 3.1 NSRES, das Resetsignal NMRES des Master-Mikrocontrollers 3.2 und das Resetsignal NTRES der Zündstufeneinheit 4 aktiv (in Fig. 2 und der folgenden Beschreibung sind aktive Signale durch eine 0 gekennzeichnet, d.h. low-aktiv). Dadurch befinden sich der Slave-Mikrocontroller 3.1, der Master-Mikrocontroller 3.2 und die Zündstufeneinheit 4 im Resetzustand.

Im darauf folgenden Schritt S02 deaktiviert in diesem Ausführungsbeispiel. das ASIC-Netzteil 2 das Resetsignal NSRES des Slave-Mikrocontrollers 3.1, d.h. setzt es auf den Wert 1. Damit wird der Slave-Mikrocontroller 3.1 aktiviert, der daraufhin einen Systemtest durchführt. Im Schritt S03 wird überprüft, ob Betriebsbereitschaft des Slave-Mikrocontrollers 3.1 gewährleistet ist. Ist dies der Fall, sendet der Slave-Mikrocontroller 3.1 ein Betriebsbereitschaftssignal SOK in diesem Ausführungsbeispiel an das ASIC-Netzteil 2 zurück mit dem Wert 1 (Schritt S05). Im anderen Fall (Schritt S04), d.h. wenn der Slave-Mikrocontroller 3.1 nicht betriebsbereit ist, sendet er das Betriebsbereitschaftssignal SOK mit dem Wert 0 an das ASIC-Netzteil 2 zurück, das daraufhin die beiden Resetsignale NMRES und NTRES des Master-Mikrocontrollers 3.2 und der Zündstufeneinheit 4 jeweils auf den Wert 0 belässt. Anschließend wird wieder die Abfrage im Schritt S03 ausgeführt. Damit verbleiben der Master-Mikrocontroller 3.2 und die Zündstufeneinheit 4 solange im Resetzustand, bis der Slave-Mikrocontroller 3.1 betriebsbereit ist und sein Betriebsbereitschaftssignal SOK mit dem Wert 1 an das ASIC-Netzteil 2 sendet.

Ist der Slave-Mikrocontroller 3.1 betriebsbereit, setzt in diesem Ausführungsbeispiel das ASIC-Netzteil 2 in Schritt S06 das Resetsignal NMRES des Master-Mikrocontrollers 3.2 auf den Wert 1. Daraufhin prüft der Master-Mikrocontroller 3.2 seine Betriebsbereitschaft (Abfrageschritt S07). Ist diese gewährleistet, sendet der Master-Mikrocontroller 3.2 ein Betriebsbereitschaftssignal MOK mit dem Wert 1 an das ASIC-Netzteil 2 zurück (Schritt S09). Bei Fehlern oder Betriebsstörungen, also wenn der Master-Mikrocontroller 3.2 nicht betriebsbereit ist, sendet er den Wert 0 an das ASIC-Netzteil 2 zurück (Schritt S08). Dieses belässt das Resetsignal NTRES der Zündstufeneinheit 4 auf dem Wert 0. Die Zündstufeneinheit 4 bleibt daher solange im Resetzustand, bis der Master-Mikrocontroller 3.2 betriebsbereit ist.

Erst wenn beide Mikrocontroller 3.1, 3.2 betriebsbereit sind (Schritt S09), wird das Resetsignal 5.5 der Zündstufeneinheit 4 auf den Wert 1 gesetzt. Damit ist die Zündstufeneinheit 4 aktiviert (Schritt S10). Gleichzeitig startet das ASIC-Netzteil 2 eine Frequenzüberwachung der Kommunikationsfrequenz auf der Taktleitung 6, die vom Master-Mikrocontroller 3.2 zum ASIC-Netzteil 2 führt. Liegt die Kommunikationsfrequenz 6 außerhalb eines vorgegebenen Toleranzbereichs (Prüfroutine implementiert durch Schleife mit Abfrage S11), werden die Resetsignale aller Einheiten 3.1, 3.2 und 4 auf den Wert 0 gesetzt S01, d.h. alle Einheiten werden in ihren Resetzustand gebracht. Das ASIC-Netzteil 2 kann dann das Resetsignal NSRES des Slave-Mikrocontrollers 3.1 wieder auf den Wert NSRES=1 setzen (Schritt S02) und mit einer erneuten Aktivierung der Einheiten 3.1, 3.2 und 4 des Steuergerätes 1 beginnen.

An dieser Stelle sei angemerkt, dass die beiden Mikrocontroller 3.1, 3.2 während des Betriebes des Steuergerätes 1 fortwährend eine Überwachung ihrer Systeme durchführen sowie die Frequenzüberwachung permanent wiederholt wird, wie dies in Fig. 2 durch die Rückschleifen s13, s14 und s15 verdeutlicht wird.
Diagnostiziert der Slave-Mikrocontroller 3.1 einen Fehler, sendet er sein Betriebsbereitschaftssignal SOK mit dem Wert 0 an das ASIC-Netzteil 2, worauf dieses die Resetsignale NMRES und NTRES des Master-Mikrocontrollers 3.2 bzw. der Zündstufeneinheit 4 jeweils auf den 0 setzt. Der Master-Mikrocontroller 3.2 und die Zündstufeneinheit 4 befinden sich damit wieder im Resetzustand. Sendet der Slave-Mikrocontroller 3.1 bei wiederhergestellter Betriebsbereitschaft das Betriebsbereitschaftssignal SOK mit dem Wert 1 an das ASIC-Netzteil 2, beginnt dieses mit einer erneuten Aktivierung des Master-Mikrocontrollers 3.2 und der Zündstufeneinheit 4 (wie oben erläutert).

Diagnostiziert der Master-Mikrocontroller 3.2 einen Fehler, sendet er sein Betriebsbereitschaftssignal MOK mit dem Wert 0 an das ASIC-Netzteil 2, worauf dieses das Resetsignal NTRES der Zündstufeneinheit 4 auf den Wert 0 setzt. Die Zündstufeneinheit 4 befindet sich damit wieder im Resetzustand. Sendet der Master-Mikrocontroller 3.2 bei wiederhergestellter Betriebsbereitschaft das Betriebsbereitschaftssignal MOK mit dem Wert 1 an das ASIC-Netzteil 2, beginnt dieses mit einer erneuten Aktivierung der Zündstufeneinheit 4. Ist die bevorzugte Frequenzüberwachung vorhanden, so wird auch diese mit dem Betriebsbereitschaftssignal MOK= 1 angestossen. Diagnostiziert die als dritter paralleler, permanenter Überwachungsprozeß (s15) in diesem Ausführungsbeispiel vorgesehene Frequenzüberwachung eine Überschreitung der Toleranzgrenzen, wird in diesem Ausführungsbeispiel ein Systemgesamtreset gemäß Rückschleife s12 und Schritt s01 eingeleitet.

Es ist aber darauf hinzuweisen, dass analog zum stufenweisen Aufbau dieser Resetkette auch ein stufenweiser, begrenzter Abbau denkbar ist. Bereits in Fig. 2 ist skizziert, dass bei Wegfall der Betriebsbereitschaft des Master-Mikrocontrollers 3.2 der Slave-Microcontroller 3.1 weiter in Betrieb bleiben kann und so die Wiederinbetriebnahme deutlich schneller erfolgen kann.

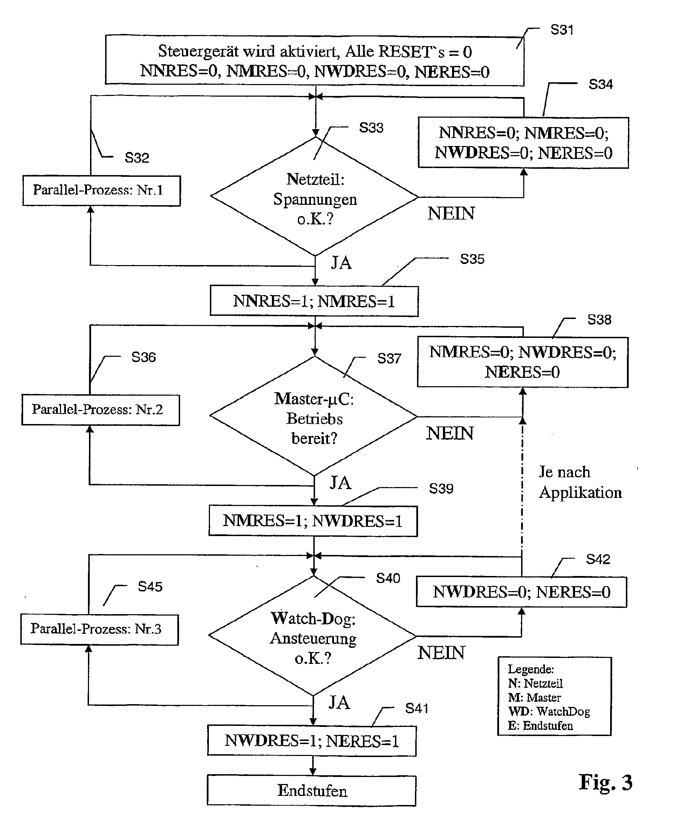

Dieser Ansatz wird auch in Fig. 3 aufgegriffen. Das dort gezeigte Ausführungsbeispiel zeigt ebenfalls eine dreistufige Resetkette für die drei parallelen Überwachungsprozesse, wobei jedoch nur eine Microcontrollereinheit 3 vorgesehen ist, die beispielsweise als Dual-Core-Prozessor-System - mit identischen Microcontrollern und identischem Funktionsablauf sowie einer Plausibilitätsprüfung zwischen beiden Microcontrollern ausgestaltet sein kann. Die Frequenzüberwachung ist in diesem Beispiel als eine Watchdog-Einheit realisiert, die innerhalb vorgesehener Zeitfenster ein Signal des Microcontrollers erhalten muß und darüber die Frequenzganggenauigkeit des Systems indirekt mit überwacht.
Darüber hinaus ist eine Spannungsüberwachung vorgesehen, die bspw. im ASIC-Netzteil 2 integriert ist und welche die Versorgungsspannung auf Einhaltung der vorgegebenen Toleranzgrenzen überwacht.
Wieder ist erkennbar, dass diese erste Stufe (S33) die Voraussetzung für die Inbetriebnahme der höheren Stufen ist und ein Wegfall der Betriebsbereitschaft (S34) dieser Stufe alle übergeordneten Stufen zurücksetzt (Netzteilreset NNRES = 0, Masterreset NMRES=0, Watchdogreset NWDRES=0, Endstufenreset NERES=0).

Wird in Schritt S32 die erste Stufe in Betrieb genommen, startet deren permanenter Überwachungsprozess, der durch die Rückschleife S32 angedeutet wird als auch der Start der Inbetriebnahme des (Master)-Microcontrollers 3 mit Schritt S35.
Wieder ist erkennbar, dass diese zweite Stufe (S37) die Voraussetzung für die Inbetriebnahme der höheren Stufen ist und ein Wegfall der Betriebsbereitschaft (S38) dieser Stufe alle übergeordneten Stufen zurücksetzt (Watchdogreset NWDRES=0, Endstufenreset NERES=0), aber eben nicht auch noch der Netzteil-ASIC 2 komplett neu in Betrieb genommen werden muß.
Wird in Schritt S37 der Microcontroller 3 und damit die zweite Stufe der Resetkette in Betrieb genommen, startet deren permanenter Überwachungsprozess, der durch die Rückschleife S36 angedeutet wird, als auch der Start der Inbetriebnahme der Watchdog-Einheit mit Schritt S39. Wieder ist erkennbar, dass diese dritte Stufe (S40) die Voraussetzung für die Inbetriebnahme der höheren Stufe (Freigabe der Endstufen 4) ist und ein Wegfall der Betriebsbereitschaft (S45) dieser Stufe die übergeordnete Stufe zurücksetzt (Endstufenreset NERES=0), aber eben nicht das Steuergerät 1 komplett neu in Betrieb genommen werden muß, da Netzteil-ASIC 2 und Microcontroller 3 weiter aktiv gehalten werden.
Das Steuergerät fällt also vorzugsweise nur um die jeweils nicht betriebsbereite Resetstufe zurück. Je nach Applikation kann definiert werden, welche Resetstufen auf welche Betriebsausfälle hin ausgelöst werden.

### Bezugszeichen

- 1: Steuergerät für eine Sicherheitseinrichtung eines Fahrzeugs
- 2: ASIC-Netzteil
- 3.1: Slave-Mikrocontroller
- 3.2: Master-Mikrocontroller
- 4: Zündstufeneinheit
- 5.1: Resetleitung des Slave-Mikrocontrollers
- 5.2: Betriebsbereitschaftsleitung des Slave-Mikrocontrollers;
- 5.3: Resetleitung des Master-Mikrocontrollers
- 5.4: Betriebsbereitschaftsleitung des Master-Mikrocontrollers
- 5.5: Resetleitung der Zündstufeneinheit
- 6: Taktleitung

- S01-S45: Verfahrensschritte
- NMRES: Resetsignal des Master-Mikrocontrollers 3.2
- MSRES: Resetsignal des Slave-Mikrocontrollers 3.1
- NTRES: Resetsignal der Zündstufeneinheit 4
- NERES: Resetsignal der Endstufeneinheit 4
- NWDRES: Resetsignal für die Watchdog-Frequenzüberwachung
- NNRES: Resetsignal des Netzteil-ASIC 2
- MOK: Betriebsbereitschaftssignal des Master-Mikrocontrollers 3.2
- SOK: Betriebsbereitschaftssignal des Slave-Mikrocontrollers 3.1

## Patentansprüche

1. Verfahren zum Betrieb eines Steuergeräts für ein Fahrzeug, insbesondere eines Steuergerätes (1) für eine Sicherheitseinrichtung eines Fahrzeugs, umfassend:
mindestens eine Steuereinheit (3.1, 3.2), und
mindestens eine Endstufeneinheit (4) zur Ansteuerung von Aktuatoren des Fahrzeugs,
**dadurch gekennzeichnet, dass**
a) die mindestens eine Endstufeneinheit erst aktiviert (S10) wird, wenn die mindestens eine Steuereinheit (3.1, 3.2) eine Meldung über eine ordnungsgemäße Betriebsbereitschaft (S05, S09) gesendet hat.
b) die mindestens eine Endstufeneinheit in einen Resetzustand versetzt (S04, S08) werden, wenn die mindestens eine Steuereinheit (3.1, 3.2) eine Meldung über eine Störung der Betriebsbereitschaft (S03, S07) sendet.

2. Verfahren gemäß Anspruch 1, **dadurch gekennzeichnet, dass** eine von der mindestens einen Steuereinheit (3.2) erzeugte Kommunikationsfrequenz (6) von Schnittstellen des Steuergerätes (1) mit externen Sensoren überwacht (S10), wenn die mindestens eine Steuereinheit (3.2) eine Meldung über eine ordnungsgemäße Betriebsbereitschaft gesendet hat (S05, S09).

3. Verfahren gemäß Anspruch 2, **dadurch gekennzeichnet, dass** bei einer erfassten Frequenzstörung (S11) ein Reset der mindestens einen Endstufeneinheit (4) vorgenommen wird (S01).

4. Verfahren gemäß Anspruch 3, **dadurch gekennzeichnet, dass** bei einer erfassten Frequenzstörung (S11) ein Reset der mindestens einen Steuereinheit (3.1,3.2) vorgenommen wird (S01).

5. Verfahren gemäß einem der Ansprüche 1 bis 4, **dadurch gekennzeichnet, dass** das Steuergerät (1) eine erste Steuereinheit (3.1) und mindestens eine zweite Steuereinheit (3.2) umfasst, die zur Überwachung der Funktion der ersten Steuereinheit vorgesehen ist.

6. Verfahren gemäß Anspruch 5, **dadurch gekennzeichnet, dass** die mindestens eine zweite Steuereinheit (3.2) erst aktiviert (S06) wird, wenn die erste Steuereinheit (3.1) eine Meldung über eine ordnungsgemäße Betriebsbereitschaft gesendet hat (S05), und die mindestens eine Endstufeneinheit erst dann aktiviert (S10) wird, wenn die mindestens eine zweite Steuereinheit (3.2) eine Meldung über eine ordnungsgemäße Betriebsbereitschaft gesendet hat (S09).

7. Verfahren gemäß Anspruch 5 oder 6, **dadurch gekennzeichnet, dass** die mindestens eine Endstufeneinheit (4) in einen Resetzustand versetzt (S08) wird, wenn die mindestens eine zweite Steuereinheit (3.2) eine Meldung über eine Störung der Betriebsbereitschaft sendet (S07).

8. Verfahren gemäß Anspruch 7, **dadurch gekennzeichnet, dass** die mindestens eine erste Steuereinheit (3.1) aktiv gehalten wird, wenn nur die mindestens eine zweite Steuereinheit (3.2) eine Meldung über eine Störung der Betriebsbereitschaft sendet.

9. Verfahren gemäß einem der Ansprüche 5 bis 8, **dadurch gekennzeichnet, dass** die mindestens eine zweite Steuereinheit (3.2) und die mindestens eine Endstufeneinheit (4) in einen Resetzustand versetzt (S04), wenn die erste Steuereinheit (3.1) eine Meldung über eine Störung der Betriebsbereitschaft sendet (S03).

10. Verfahren gemäß einem der Ansprüche 5 bis 9 **dadurch gekennzeichnet, dass** eine von der zweiten Steuereinheit (3.2) erzeugte Kommunikationsfrequenz (6) von Schnittstellen des Steuergerätes (1) mit externen Sensoren überwacht, wenn die zweite Steuereinheit (3.2) eine Meldung über eine ordnungsgemäße Betriebsbereitschaft an die Versorgungseinheit (2) gesendet hat und bei einer erfassten Frequenzstörung einen Reset der mindestens einen Endstufeneinheit (4) sowie der zweiten Steuereinheit (3.2) vornimmt.

11. Verfahren nach Anspruch 5, **dadurch gekennzeichnet, dass** die erste Steuereinheit (3.1) dabei aktiv bleibt.

12. Verfahren nach einem der vorangehenden Ansprüche, **dadurch gekennzeichnet, dass** dass eine das Steuergerät versorgende Versorgungsspannung überwacht wird und die die mindestens eine Steuereinheit (3.1, 3.2) erst aktiviert wird, wenn eine Meldung über eine ordnungsgemäße Betriebsbereitschaft der Versorgungsspannung gesendet wurde.

13. Steuergerät (1) für ein Fahrzeug, umfassend mindestens eine Steuereinheit (3.1, 3.2), und mindestens eine Endstufeneinheit (4) zur Ansteuerung von Aktuatoren des Fahrzeugs, **dadurch gekennzeichnet, dass** das Steuergerät zur Durchführung des Verfahrens nach einem der vorangehenden Ansprüche ausgebildet ist.

14. Steuergerät nach Anspruch 13, **dadurch gekennzeichnet, dass** eine Versorgungseinheit (2) vorgesehen ist, welche die Steuereinheit(en) aktiviert, Meldungen über die Betriebsbereitschaft erhält und Resets vornimmt.

15. Sicherheitseinrichtung für Kraftfahrzeug, mit einem Steuergerät gemäß Anspruch 13 oder 14, wobei die zumindest eine Endstufeneinheit eine Zündstufeneintieit (4) zur Ansteuerung pyrotechnischer Zünder von Schutzmitteln des Fahrzeugs ist.

## Claims

1. A method for operating a control device for a motor vehicle, in particular a control device (1) for a safety device of a motor vehicle, comprising:
at least one control unit (3.1, 3.2), and
at least one output stage unit (4) for triggering actuators of the motor vehicle,
**characterized in that**
a) the at least one output stage unit is only activated (S10) when the at least one control unit (3.1, 3.2) has reported correct operational readiness (S05, S09).
b) the at least one output stage unit is set to a reset state (S04, S08) when the at least one control unit (3.1, 3.2) reports a fault in operational readiness (S03, S07).

2. A method according to claim 1, **characterized in that** a communication frequency (6) which is generated by the at least one control unit (3.2) is monitored by interfaces of the control device (1) with external sensors (S10) when the at least one control unit (3.2) has reported correct operational readiness (S05, S09).

3. A method according to claim 2, **characterized in that** with a recorded frequency fault (S11), a reset of the at least one output stage unit (4) is conducted (S01).

4. A method according to claim 3, **characterized in that** with a recorded frequency fault (S11), a reset of the at least one control unit (3.1, 3.2) is conducted (S01).

5. A method according to any one of claims 1 to 4, **characterized in that** the control device (1) comprises a first control unit (3.1) and at least one second control unit (3.2) which is provided to monitor the functioning of the first control unit.

6. A method according to claim 5, **characterized in that** the at least one second control unit (3.2) is only activated (506) when the first control unit (3.1) has reported correct operational readiness (S05), and the at least one output stage unit is only activated (S10) when the at least one second control unit (3.2) has reported correct operational readiness (S09).

7. A method according to either of claims 5 or 6, **characterized in that** the at least one output stage unit (4) is set to a reset state (508) when the at least one second control unit (3.2) reports a fault in operational readiness (S07).

8. A method according to claim 7, **characterized in that** the at least one first control unit (3.1) is kept active when only the at least one second control unit (3.2) reports a failure in operational readiness.

9. A method according to any one of claims 5 to 8, **characterized in that** the at least one second control unit (3.2) and the at least one output stage unit (4) are set to a reset state (504) when the first control unit (3.1) reports a fault in operational readiness (503).

10. A method according to any one of claims 5 to 9, **characterized in that** a communication frequency (6) which is generated b the second control unit (3.2) is monitored by interfaces of the control unit (1) with external sensors when the second control unit (3.2) has reported correct operational readiness to the supply unit (2), and conducts a reset of the at least one output stage unit (4) and of the second control unit (3.2) when a frequency fault is recorded.

11. A method according to claim 5, **characterized in that** the first control unit (3.1) remains active during the procedure.

12. A method according to any one of the preceding claims, **characterized in that** the supply voltage which supplies the control device is monitored and the at least one control unit (3.1, 3.2) is only activated when correct operational readiness of the supply voltage is reported.

13. A control device (1) for a motor vehicle, comprising at least one control unit (3.1, 3.2) and at least one output stage unit (4) for triggering actuators of the motor vehicle, **characterized in that** the control device is designed to conduct the method according to any one of the preceding claims.

14. A control device according to claim 13, **characterized in that** a supply unit (2) is provided which activates the control unit/s, receives reports on operational readiness and conducts resets.

15. A safety device for a motor vehicle with a control device according to either of claims 13 or 14, wherein the at least one output stage unit is an ignition stage unit (4) for triggering pyrotechnical igniters of protective means of the motor vehicle.

## Revendications

1. Procédé de fonctionnement d'un appareil de commande pour un véhicule, en particulier d'un appareil de commande (1) pour un équipement de sécurité d'un véhicule, comprenant :
au moins une unité de commande (3.1, 3.2), et
au moins une unité d'étages terminaux (4) pour le pilotage d'actionneurs du véhicule,
**caractérisé en ce que**
a) l'unité d'étages terminaux, au moins au nombre de un, n'est activée (S10) que si l'unité de commande (3.1, 3.2), au moins au nombre de un, a envoyé un message relatif à un état de fonctionnement conforme (S05, S09).
b) l'unité d'étages terminaux, au moins au nombre de un, est placée dans un état de reset (S04, S08) si l'unité de commande (3.1, 3.2), au moins au nombre de un, envoie un message relatif à une perturbation de l'état de fonctionnement (S03, S07).

2. Procédé selon la revendication 1, **caractérisé en ce qu'**une fréquence de communication (6) produite par l'unité de commande (3.2), au moins au nombre de un, d'interfaces de l'appareil de commande (1) surveille avec des capteurs externes (S10) si l'unité de commande (3.2), au moins au nombre de un, a envoyé un message relatif à un état de fonctionnement conforme (S05, S09).

3. Procédé selon la revendication 2, **caractérisé en ce que**, en cas de perturbation de fréquence détectée (S11), un reset de l'unité d'étages terminaux (4), au moins au nombre de un, est effectué (S01).

4. Procédé selon la revendication 3, **caractérisé en ce que**, en cas de perturbation de fréquence détectée (S11), un reset de l'unité de commande (3.1, 3.2), au moins au nombre de un, est effectué (S01).

5. Procédé selon une des revendications 1 à 4, **caractérisé en ce que** l'appareil de commande (1) englobe une première unité de commande (3.1) et au moins une deuxième unité de commande (3.2) qui est prévue pour la surveillance de la fonction de la première unité de commande.

6. Procédé selon la revendication 5, **caractérisé en ce que** la deuxième unité de commande (3.2), au moins au nombre de un, n'est activée (S06) que si la première unité de commande (3.1) a envoyé un message relatif à un état de fonctionnement conforme (S05), et l'unité d'étages terminaux, au moins au nombre de un, n'est activée (S10) que si la deuxième unité de commande (3.2), au moins au nombre de un, a envoyé un message relatif à un état de fonctionnement conforme (S09).

7. Procédé selon la revendication 5 ou 6, **caractérisé en ce que** l'unité d'étages terminaux (4), au moins au nombre de un, est placée dans un état de reset (S08) si la deuxième unité de commande (3.2), au moins au nombre de un, envoie un message relatif à une perturbation de l'état de fonctionnement (S07).

8. Procédé selon la revendication 7, **caractérisé en ce que** la première unité de commande (3.1), au moins au nombre de un, est maintenue active si seulement la deuxième unité de commande (3.2), au moins au nombre de un, envoie un message relatif à une perturbation de l'état de fonctionnement.

9. Procédé selon une des revendications 5 à 8, **caractérisé en ce que** la deuxième unité de commande (3.2), au moins au nombre de un, et l'unité d'étages terminaux (4), au moins au nombre de un, sont placées dans un état de reset (S04) si la première unité de commande (3.1) envoie un message relatif à une perturbation de l'état de fonctionnement (S03).

10. Procédé selon une des revendications 5 à 9, **caractérisé en ce qu'**une fréquence de communication (6), produite par la deuxième unité de commande (3.2), d'interfaces de l'appareil de commande (1) surveille avec des capteurs externes si la deuxième unité de commande (3.2) a envoyé à l'unité d'alimentation (2) un message relatif à un état de fonctionnement conforme et, en cas de perturbation de fréquence détectée, effectue un reset de l'unité d'étages terminaux (4), au moins au nombre de un, ainsi que de la deuxième unité de commande (3.2).

11. Procédé selon la revendication 5, **caractérisé en ce que** la première unité de commande (3.1) demeure active en l'occurrence.

12. Procédé selon une des revendications précédente, **caractérisé en ce qu'**une tension d'alimentation alimentant l'appareil de commande est surveillée, et l'unité de commande (3.1, 3.2), au moins au nombre de un, n'est activée que si un message relatif à un état de fonctionnement conforme de la tension d'alimentation a été envoyé.

13. Appareil de commande (1) pour un véhicule, comprenant au moins une unité de commande (3.1, 3.2), et au moins une unité d'étages terminaux (4) pour le pilotage d'actionneurs du véhicule, **caractérisé en ce que** l'appareil de commande pour la réalisation du procédé est constitué selon une des revendications précédentes.

14. Appareil de commande selon la revendication 13, **caractérisé en ce qu'**il est prévu une unité d'alimentation (2) qui active l'unité de commande/les unités de commande, reçoit des messages relatifs à l'état de fonctionnement et effectue des resets.

15. Equipement de sécurité pour véhicule automobile, avec un appareil de commande selon la revendication 13 ou 14, l'unité d'étages terminaux, au moins au nombre de un, étant une unité d'étages d'allumage (4) pour le pilotage d'allumeurs pyrotechniques de moyens de protection du véhicule.
